# EUROPEAN PATENT APPLICATION

(11) **EP 3 756 871 A1**
(43) Date of publication of application: **30.12.2020**
(21) Application number: 20176191.3
(22) Date of filing: 22.05.2020
(51) Int. Cl.: B29C 73/16, F16L 19/00, F16L 19/02, F16L 27/04, F16L 35/00, F16L 33/22, B60S 5/04

(54) **ANTI-JET JOINT STRUCTURE OF CONNECTION HOSE OF VEHICLE AIR COMPRESSOR**

(30) Priority: 30.05.2019 TW 108118851
(71) Applicant: Chou, Wen-San, Tainan City (TW); Chou, Cheng-Hsien, Tainan City (TW)
(72) Inventor: Chou, Wen-San, Tainan City (TW); Chou, Cheng-Hsien, Tainan City (TW)
(74) Representative: Lang, Christian

(57) **Abstract**

An anti-jet joint structure of a connection hose (3) of a vehicle air compressor contains: an accommodation box (1), an adhesive supply can (2), and the connection hose (3). The accommodation box (1) accommodates the vehicle air compressor started by a power to produce air. The adhesive supply can (2) accommodates chemical adhesive for repairing a tire (99), and the adhesive supply can (2) includes an open segment (21) and a supply hose (23). The connection hose (3) includes a first joint (31) and a second joint (4) opposite to the first joint (31). The first joint (31) is engaged with the supply hose (23), and the second joint (4) is screwed with a gas nozzle (9) of the tire (99). The second joint (4) is the anti-jet joint structure and has a first connection assembly (41) and a second connection assembly (42). The first connection assembly (41) is connected with or is removed from the second connection assembly (42) having different interior structures and volumes so as to mate with various tires.

## Description

### FIELD OF THE INVENTION

The present invention relates to an anti-jet joint structure of a connection hose of a vehicle air compressor which is configured to feed chemical adhesive and inflate air into a tire, thus repairing the tire.

### BACKGROUND OF THE INVENTION

A conventional vehicle air compressor is employed to feed chemical adhesive and air into a broken tire so as to repair the broken tire. The vehicle air compressor contains a button arranged on an accommodation box. However, when the button is pressed and a connection hose is not connected with an air nozzle of the tire, the chemical adhesive erupts out of a joint on an end of the connection hose suddenly.

The present invention has arisen to mitigate and/or obviate the afore-described disadvantages.

### SUMMARY OF THE INVENTION

The primary aspect of the present invention is to provide an anti-jet joint structure of a connection hose of a vehicle air compressor which contains an accommodation box configured to accommodate a vehicle air compressor, an adhesive supply can for accommodating chemical adhesive, and at least one connection hose, wherein a respective connection hose has a joint arranged on at least one end of thereof so as to prevent eruption of the chemical adhesive.

Another aspect of the present invention is to provide an anti-jet joint structure of a connection hose of a vehicle air compressor which contains a first connection assembly and a second assembly, wherein the first connection assembly is connected with or is removed from the second connection assembly having different interior structures and volumes so as to mate with various tires.

### BRIEF DESCRIPTION OF THE DRAWINGS

FIG. 1 is a perspective view showing the application of an anti-jet joint structure of a connection hose of a vehicle air compressor according to a preferred embodiment of the present invention.
FIG. 2 is another perspective view showing the application of the anti-jet joint structure of the connection hose of the vehicle air compressor according to the preferred embodiment of the present invention.
FIG. 3 is a perspective view showing the exploded components of the anti-jet joint structure of the connection hose of the vehicle air compressor according to the preferred embodiment of the present invention.
FIG. 4 is a cross-sectional perspective view showing the exploded components of the anti-jet joint structure of the connection hose of the vehicle air compressor according to the preferred embodiment of the present invention.
FIG. 5 is a side plan view showing the assembly of the anti-jet joint structure of the connection hose of the vehicle air compressor according to the preferred embodiment of the present invention.
FIG. 6 is a cross sectional view showing the exploded components of the anti-jet joint structure of the connection hose of the vehicle air compressor according to the preferred embodiment of the present invention.
FIG. 7 is a cross sectional view showing the assembly of the anti-jet joint structure of the connection hose of the vehicle air compressor according to the preferred embodiment of the present invention.
FIG. 8 is a cross-sectional view showing the operation of the anti-jet joint structure of the connection hose of the vehicle air compressor according to the preferred embodiment of the present invention.
FIG. 9 is a perspective view showing the exploded components of an anti-jet joint structure of a connection hose of a vehicle air compressor according to another preferred embodiment of the present invention.
FIG. 10 is a cross sectional view showing the assembly of the anti-jet joint structure of the connection hose of the vehicle air compressor according to another preferred embodiment of the present invention.
FIG. 11 is another cross sectional view showing the assembly of the anti-jet joint structure of the connection hose of the vehicle air compressor according to another preferred embodiment of the present invention.

### DETAILED DESCRIPTION OF THE PREFERRED EMBODIMENTS

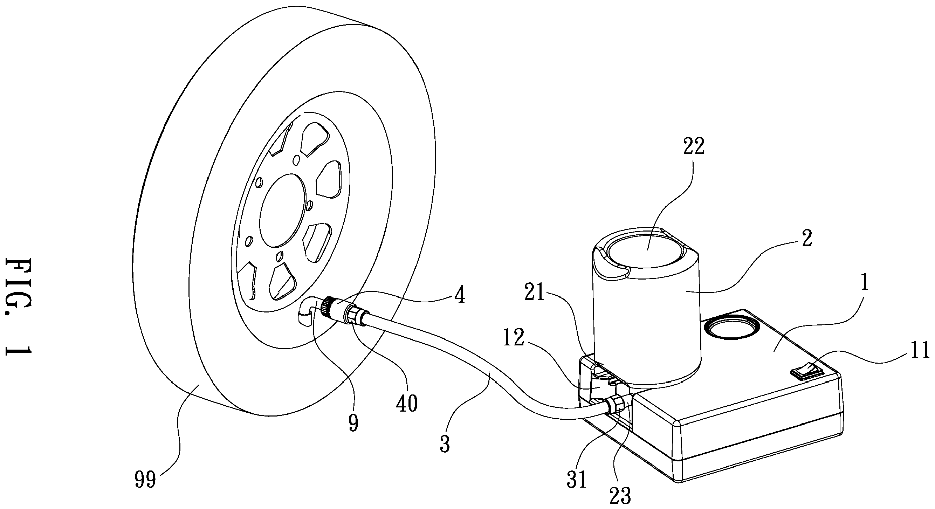

With reference to FIGS. 1-3, an anti-jet joint structure of a connection hose of a vehicle air compressor according to a preferred embodiment of the present invention comprises: an accommodation box 1, an adhesive supply can 2, and a connection hose 3.

The accommodation box 1 includes a button 11 arranged on a top thereof and has a coupling orifice 12 defined on a peripheral side of the accommodation box 1, wherein the accommodation box 1 accommodates the vehicle air compressor (not shown). The connection hose 3 includes a first joint 31 connected on a first end thereof, and the connection hose 3 includes a second joint 4 fixed on a second end thereof and configured to prevent eruption of chemical adhesive. The adhesive supply can 2 is mounted on the coupling orifice 12 of the accommodation box 1, wherein an open segment 21 is formed on a bottom of the adhesive can 2 and faces the coupling orifice 12 of the accommodation box 1, and an edge 22 is adjacent to a top of the adhesive supply can 2. The first joint 31 of the connection hose 3 is engaged with a supply hose 23 of the adhesive supply can 2. When repairing and inflating air into a tire, the second joint 4 of the connection hose 3 is screwed with a gas nozzle 9 of the tire 99. After the accommodation box 1 is started by a power from a vehicle or a DC power supply, the vehicle air compressor produces the air to force the chemical adhesive into the tire 99 from the adhesive supply can 2 via the connection hose 3, thus repairing and inflating the air into the tire 99.

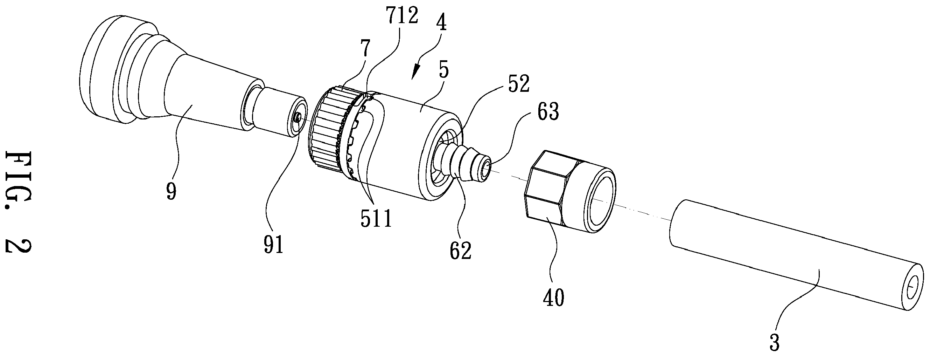

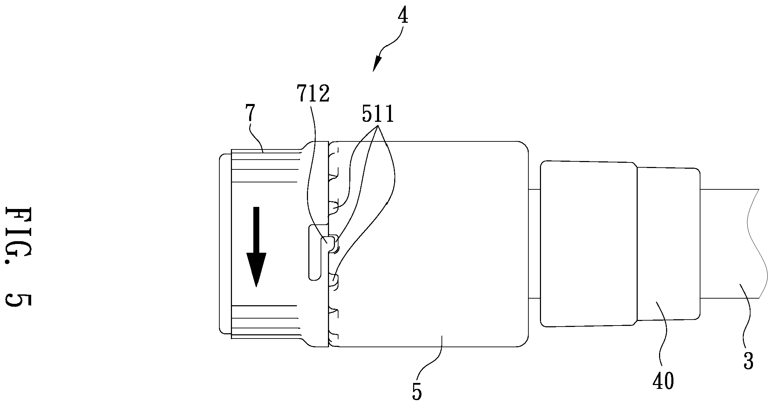

Referring to FIGS. 2, 3 and 5, to prevent the eruption of the chemical adhesive, the connection hose 3 includes the second joint 4 which is the anti-jet joint structure, and the second joint 4 has a first connection assembly 41 and a second connection assembly 42, wherein the first connection assembly 41 is connected with or is removed from the second connection assembly 42 having different interior structures and volumes so as to mate with various tires, such as the tire 99.

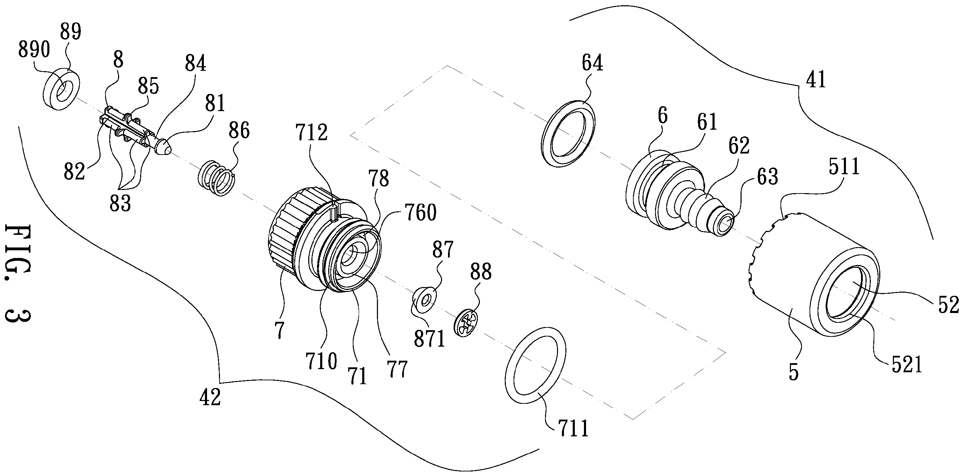

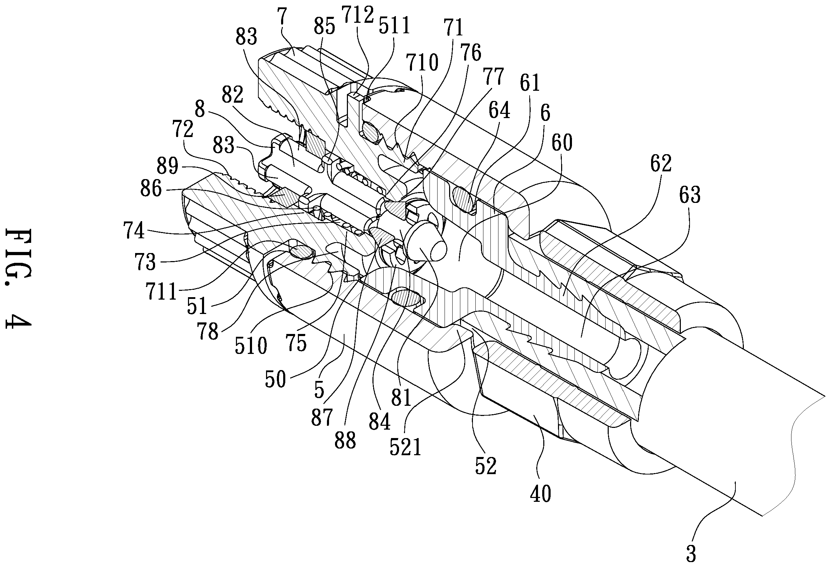

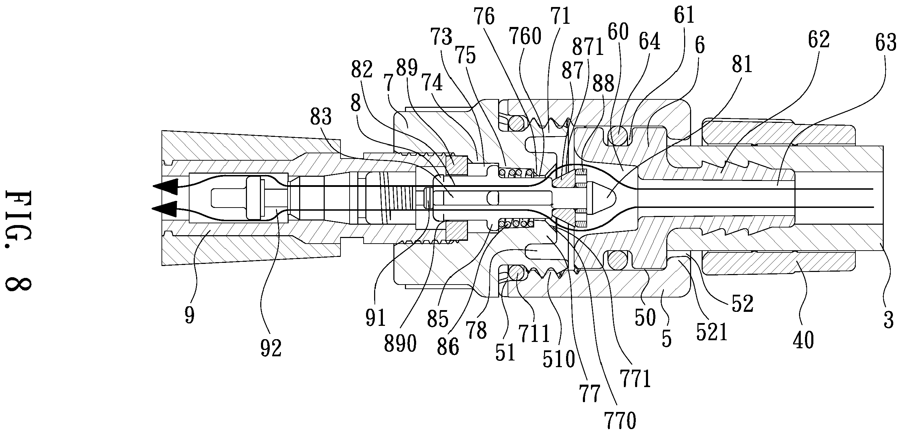

As shown in FIGS. 3-8, the first connection assembly 41 includes a first fitting sleeve 5 and a base 6, wherein the first fitting sleeve 5 has a chamber 50 defined therein, a first opening 51 defined on a first end of the first fitting sleeve 5, female threads 510 formed on an inner wall of the first fitting sleeve 5, multiple recesses 511 formed on a distal end of the first opening 51, and a through hole 52 defined on a second end of the first fitting sleeve 5, wherein a rib 521 extends inward from the through hole 52, and the through hole 52 communicates with the chamber 50. The base 6 includes a cylindrical room 60, a groove 61 formed on an outer wall of the base 6, a stepped extension 62 extending from the outer wall of the base 6 away from the groove 61, a channel 63 defined on a center of the stepped extension 62 and communicating with the cylindrical room 60, and a first seal ring 64 fitted on the groove 61 of the base 6.

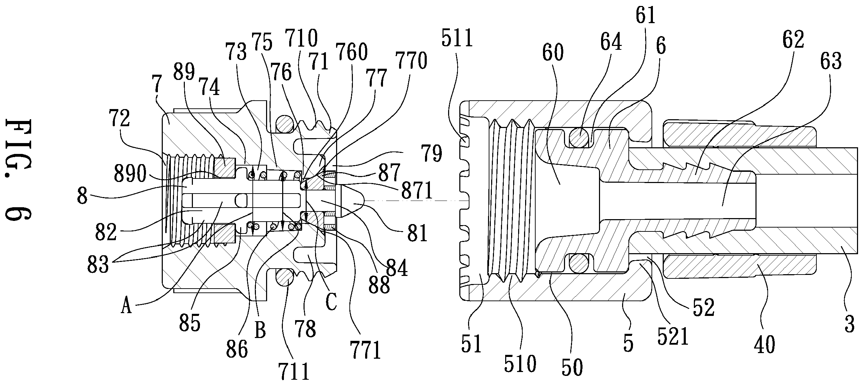

The stepped extension 62 of the base 6 is inserted into the through hole 52 from the first opening 51 of the first fitting sleeve 5 via the chamber 50 and extends out of the first fitting sleeve 5 to fit with the connection hose 3, and the connection hose 3 and the second joint 4 are connected by a fixing ring 40, as illustrated in FIG. 6.

The second connection assembly 42 includes a second fitting sleeve 7 and a valve bolt 8. The second fitting sleeve 7 includes a locating segment 71 formed on a first end thereof and having male threads 710, a threaded hole 72 defined on a second end of the second fitting sleeve 7 opposite to the locating segment 71, at least one retainer 712 defined between the locating segment 71 and the threaded hole 72, and a passage 73 extending inside the first end of the second fitting sleeve 7, wherein a diameter of the passage 73 is less than a diameter of the threaded hole 72. The second fitting sleeve 7 further includes a first stepped shoulder 74 defined between the threaded hole 72 and the passage 73, a second stepped shoulder 75 extending opposite to the first stepped shoulder 74, a stop shoulder 76 extending opposite to the second stepped shoulder 75 and having an aperture 760. A diameter A of the first stepped shoulder 74 is more than a diameter B of the second stepped shoulder 75, and the diameter B of the second stepped shoulder 75 is more than a diameter C of the aperture 760 of the stop shoulder 76. The passage 73 has a valve seat 77 extending thereon, a second opening 770 formed on a distal end of the valve seat 77, a conical fence 771 formed on the second opening 770, a circular slit 78 defined between an outer wall of the valve seat 77 and an inner wall of the locating segment 71, and a cavity 79 formed between the valve seat 77 and the locating segment 71, wherein the threaded hole 72, the passage 73, the aperture 760 of the stop shoulder 76, the second opening 770 of the valve seat 77, the circular slit 78, and the cavity 79 communicate with one another. The valve bolt 8 is cylindrical and includes a knob 81 formed on an end thereof, and the valve bolt 8 includes multiple indentations 82 separately arranged thereon and includes multiple flanges 83, wherein a respective one flange 83 of the multiple flanges 83 is defined between any two adjacent indentations 82 of the multiple indentations 82, the respective one flange 83 has a tab 85 extending therefrom, and a recessed section 84 is defined among the knob 81 and the multiple flanges 83. The valve bolt 8 further includes a spring 86 fitted from the knob 81 to abut against the tab 85, and the valve bolt 8 is accommodated into the passage 73 from the threaded hole 72 so that the spring 86 contacts with the stop shoulder 76 and is surrounded by the second stepped shoulder 75. The valve bolt 8 includes a cap 87 fitted on the recessed section 84 of the valve bolt 8, and the cap 87 has a cone-shaped face 871 formed on an outer wall of the cap 87 and configured to abut against a connection portion of the conical fence 771 and the stop shoulder 76. The valve bolt 8 includes a locking disc 88 engaged on the recessed section 84 between the cap 87 and the knob 81, a washer 89 having a bore 890 and fitted into the threaded hole 72 of the second fitting sleeve 7 to abut against the first stepped shoulder 74 by ways of the bore 890, wherein the tab 85 of the valve bolt 8 moves in the passage 73 of the first stepped shoulder 74, and a second seal ring 711 is fitted with the locating segment 71 of the second fitting sleeve 7, such that the second seal ring 711, the spring 86, the cap 87, the washer 89, and the locating segment 71 of the second fitting sleeve 7 are accommodated into the first connection assembly 41, wherein the locating segment 71 is screwed with the first opening 51 in which the base 6 is received, in other words, the male threads 710 of the locating segment 71 are screwed with the female threads 510 of the first opening 51 of the first fitting sleeve 5, and the at least one retainer 712 of the second fitting sleeve 7 is retained with the multiple recesses 511 of the first fitting sleeve 5, as shown in FIGS. 3-5, hence the first connection assembly 41 and the second assembly 42 are connected firmly. In another embodiment, the diameter A of the first stepped shoulder 74 is equal to the diameter B of the second stepped shoulder 75, and the diameter B of the second stepped shoulder 75 is more than the diameter C of the aperture 760 of the stop shoulder 76.

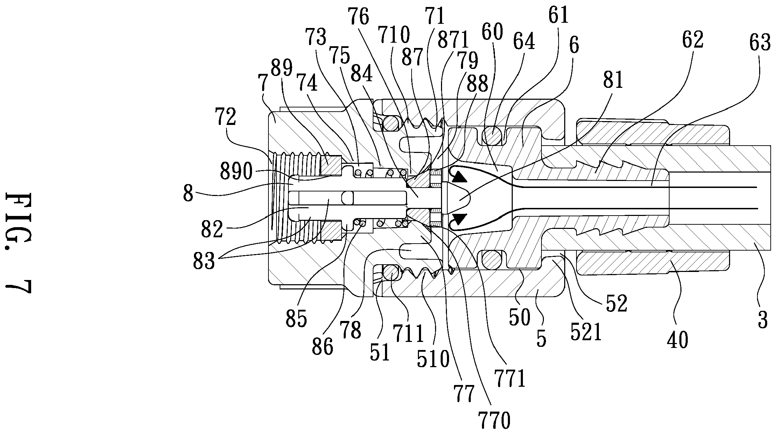

With reference to FIG. 7, when the button 11 of the accommodation box 1 is pressed so that the chemical adhesive is forced by the air, the cone-shaped face 871 of the cap 87 abuts against the connection portion of the conical fence 771 and the stop shoulder 76 matingly, hence the chemical adhesive is stopped flowing through the aperture 760 of the stop shoulder 76, thus preventing the eruption of the chemical adhesive.

Referring to FIGS. 1-8, when the threaded hole 72 of the second joint 4 is screwed with the gas nozzle 9 of the tire 99, the valve bolt 8 of the second joint 4 forces a needle 91 of the gas nozzle 9 of the tire 99 to move, hence a valve 92 of the gas nozzle 9 is opened. In addition, the tab 85 of the valve bolt 8 contacts with the first stepped shoulder 74 of the second fitting sleeve 7, and the valve bolt 8 presses the spring 86 so that the cone-shaped face 871 of the cap 87 removes from the connection portion of the conical fence 771 of the valve seat 77 of the second fitting sleeve 7 and the stop shoulder 76 matingly, and the chemical adhesive flows into the tire from the aperture 760 of the stop shoulder 76 via the channel 63 of the base 6, the cylindrical room 60, the multiple indentations 82 of the valve bolt 8, the passage 73, the bore 890 of the washer 89, the threaded hole 72, and the valve 92 of the gas nozzle 9, thus feeding the chemical adhesive and inflating the air into the tire.

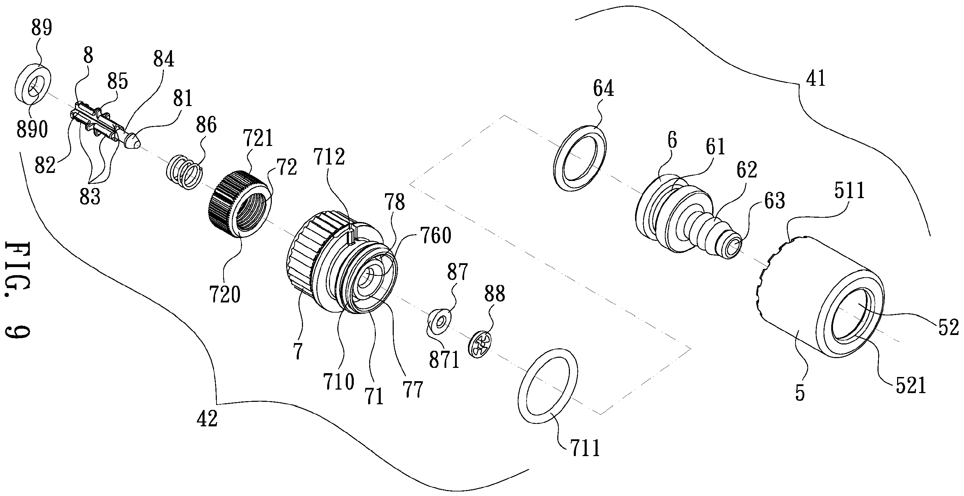

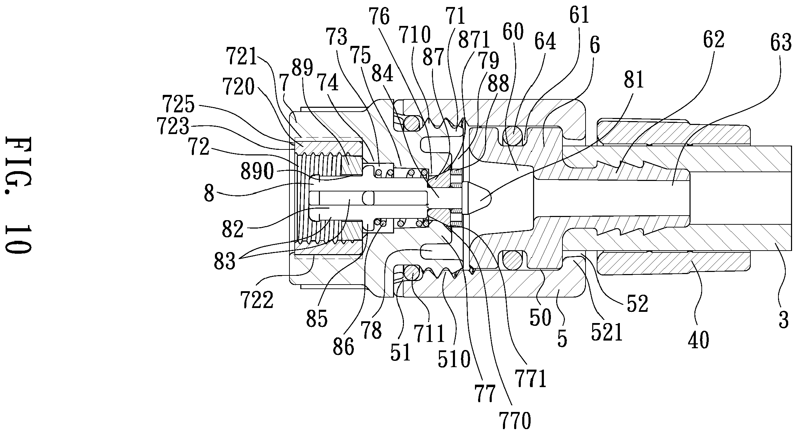

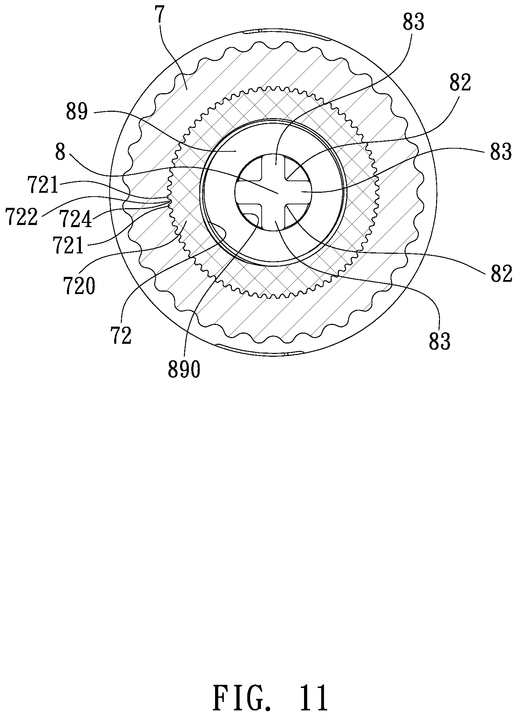

As shown in FIGS. 9-11, in another embodiment, a nut 720 is accommodated in the second end of the second fitting sleeve 7 opposite to the locating segment 71, and the nut 720 has multiple teeth 721 longitudinally formed on an outer wall thereof, wherein a respective one of multiple cutouts 722 is defined between any two adjacent teeth 721, and the respective one cutout 722 is engaged with a respective one of multiple defining wings 724 of the second fitting sleeve 7, as shown in FIG. 11, such that the nut 720 is connected with the second fitting sleeve 7 securely. As illustrated in FIG. 10, a limitation protrusion 725 is formed on the second end of the second fitting sleeve 7 opposite to the locating segment 71 so as to contact with an external fringe 723 of the nut 720, and the washer 89 is accommodated into the nut 702 to contact with the first stepped shoulder 74 of the second fitting sleeve 7.

Thereby, the second joint 4 is fixed on the second end of the connection hose 3 and is configured to feed the chemical adhesive, inflate the air, and prevent eruption of chemical adhesive to the tire 99. Preferably, the first connection assembly 41 of the second joint 4 is connected with or is removed from the second connection assembly 42 of the second joint 4 so as to mate with the tire 99.

## Claims

1. An anti-jet joint structure of a connection hose (3) of a vehicle air compressor comprising:
an accommodation box (1) accommodating the vehicle air compressor started by a power to produce air;
an adhesive supply can (2) including an open segment (21) and configured to accommodate chemical adhesive for repairing a tire (99), and the adhesive supply can (2) including a supply hose (23) mounted on the open segment (21); and
the connection hose (3) including a first joint (31) connected on a first end of the connection hose (3), and the connection hose (3) including a second joint (4) fixed on a second end of the connection hose (3), the first joint (31) being engaged with the supply hose (23) of the adhesive supply can (2), and the second joint (4) being screwed with a gas nozzle (9) of the tire (99);
wherein the second joint (4) is the anti-jet joint structure and has a first connection assembly (41) and a second connection assembly (42), the first connection assembly (41) is connected with or is removed from the second connection assembly (42) having different interior structures and volumes so as to mate with various tires.

2. The anti-jet joint structure as claimed in claim 1, wherein the first connection assembly (41) includes a first fitting sleeve (5) and a base (6), the first fitting sleeve (5) has a chamber (50) defined therein, a first opening (51) defined on a first end of the first fitting sleeve (5), female threads (510) formed on an inner wall of the first fitting sleeve (5), and a through hole (52) defined on a second end of the first fitting sleeve (5), wherein a rib (521) extends inward from the through hole (52), and the through hole (52) communicates with the chamber (50); the base (6) includes a cylindrical room (60), a groove (61) formed on an outer wall of the base (6), a stepped extension (62) extending from the outer wall of the base (6) away from the groove (61), a channel (63) defined on a center of the stepped extension (62) and communicating with the cylindrical room (60), and a first seal ring (711) fitted on the groove (61) of the base (6); the stepped extension (62) of the base (6) is inserted into the through hole (52) from the first opening (51) of the first fitting sleeve (5) via the chamber (50) and extends out of the first fitting sleeve (5) to fit with the connection hose (3), and the connection hose (3) and the second joint (4) are connected by a fixing ring (40).

3. The anti-jet joint structure as claimed in claim 2, wherein the second connection assembly (42) includes a second fitting sleeve (7) and a valve bolt (8), the second fitting sleeve (7) includes a locating segment (71) formed on a first end thereof and having male threads (710), a threaded hole (72) defined on a second end of the second fitting sleeve (7) opposite to the locating segment (71), and a passage (73) extending inside the first end of the second fitting sleeve (7), wherein a diameter of the passage (73) is less than a diameter of the threaded hole (72), the second fitting sleeve (7) further includes a first stepped shoulder (74) defined between the threaded hole (72) and the passage (73), a second stepped shoulder (75) extending opposite to the first stepped shoulder (74), a stop shoulder (76) extending opposite to the second stepped shoulder (75) and having an aperture (760), wherein the passage (73) has a valve seat (77) extending thereon, a second opening (770) formed on a distal end of the valve seat (77), a conical fence (771) formed on the second opening (770), a circular slit (78) defined between an outer wall of the valve seat (77) and an inner wall of the locating segment (71), and a cavity (79) formed between the valve seat (77) and the locating segment (71), wherein the threaded hole (72), the passage (73), the aperture (760) of the stop shoulder (76), the second opening (770) of the valve seat (77), the circular slit (78), and the cavity (79) communicate with one another.

4. The anti-jet joint structure as claimed in claim 3, wherein a diameter A of the first stepped shoulder (74) is more than a diameter B of the second stepped shoulder (75), and the diameter B of the second stepped shoulder (75) is more than a diameter C of the aperture (760) of the stop shoulder (76).

5. The anti-jet joint structure as claimed in claim 3, wherein the valve bolt (8) is cylindrical and includes a knob (81) formed on an end thereof, and the valve bolt (8) includes multiple indentations (82) separately arranged thereon and includes multiple flanges (83), wherein a respective one flange (83) of the multiple flanges (83) is defined between any two adjacent indentations (82) of the multiple indentations (82), the respective one flange (83) has a tab (85) extending therefrom, and a recessed section (84) is defined among the knob (81) and the multiple flanges (83).

6. The anti-jet joint structure as claimed in claim 5, wherein the valve bolt (8) further includes a spring (86) fitted from the knob (81) to abut against the tab (85), and the valve bolt (8) is accommodated into the passage (73) from the threaded hole (72) so that the spring (86) contacts with the stop shoulder (76) and is surrounded by the second stepped shoulder (75); wherein the valve bolt (8) includes a cap (87) fitted on the recessed section (84) of the valve bolt (8), and the cap (87) has a cone-shaped face (871) formed on an outer wall of the cap (87) and configured to abut against a connection portion of the conical fence (771) and the stop shoulder (76).

7. The anti-jet joint structure as claimed in claim 6, wherein the valve bolt (8) includes a locking disc (88) engaged on the recessed section (84) between the cap (87) and the knob (81).

8. The anti-jet joint structure as claimed in claim 5, wherein the tab (85) of the valve bolt (8) moves in the passage (73) of the first stepped shoulder (74).

9. The anti-jet joint structure as claimed in claim 6, wherein the valve bolt (8) includes a washer (89) having a bore (890) and fitted into the threaded hole (72) of the second fitting sleeve (7) to abut against the first stepped shoulder (74) by ways of the bore (890); and a second seal ring (64) is fitted with the locating segment (71) of the second fitting sleeve (7), such that the second seal ring (64), the spring (86), the cap (87), the washer (89), and the locating segment (71) of the second fitting sleeve (7) are accommodated into the first connection assembly (41), wherein the locating segment (71) is screwed with the first opening (51) in which the base (6) is received, the male threads (710) of the locating segment (71) are screwed with the female threads (510) of the first opening (51) of the first fitting sleeve (5).

10. The anti-jet joint structure as claimed in claim 9, wherein the first fitting sleeve (5) includes multiple recesses (511) formed on a distal end of the first opening (51); at least one retainer (712) defined between the locating segment (71) and the threaded hole (72) of the second fitting sleeve (7), and the at least one retainer (712) of the second fitting sleeve (7) is retained with the multiple recesses (511) of the first fitting sleeve (5).

11. The anti-jet joint structure as claimed in claim 3, wherein the diameter A of the first stepped shoulder (74) is equal to the diameter B of the second stepped shoulder (75), and the diameter B of the second stepped shoulder (75) is more than the diameter C of the aperture (760) of the stop shoulder (76).

12. The anti-jet joint structure as claimed in claim 3, wherein a nut (720) is accommodated in the second end of the second fitting sleeve (7) opposite to the locating segment (71), and the nut (720) has multiple teeth (721) longitudinally formed on an outer wall thereof, wherein a respective one of multiple cutouts (722) is defined between any two adjacent teeth (721), and the respective one cutout (722) is engaged with a respective one of multiple defining wings (724) of the second fitting sleeve (7), such that the nut (720) is connected with the second fitting sleeve (7), wherein a limitation protrusion (725) is formed on the second end of the second fitting sleeve (7) opposite to the locating segment (71) so as to contact with an external fringe (723) of the nut (720).
